# EUROPEAN PATENT APPLICATION

(11) **EP 4 545 481 A1**
(43) Date of publication of application: **30.04.2025**
(21) Application number: 24207757.6
(22) Date of filing: 21.10.2024
(51) Int. Cl.: C01B 32/60, C01G 9/00, H01M 10/38, H01M 12/06, B01D 53/14

(54) **CARBON DIOXIDE FIXATION DEVICE AND BATTERY**

(30) Priority: 23.10.2023 JP 2023182152
(71) Applicant: Liberal LLC, Kobe-shi, Hyogo, 654-0151 (JP)
(72) Inventor: Kubota, Toru, Kobe-shi, Hyogo, 654-0151 (JP); Yoshida, Daichi, Kobe-shi, Hyogo, 650-0047 (JP)
(74) Representative: Grünecker Patent- und Rechtsanwälte PartG mbB

(57) **Abstract**

Provided is a carbon dioxide fixation device capable of efficiently fixing atmospheric carbon dioxide while extracting energy. The carbon dioxide fixation device of the present invention includes an aqueous solution containing a water-soluble polymer compound and positive and negative electrode materials, and is capable of producing carbon dioxide-derived carbonate after discharge between the electrode materials. In addition, it is preferable that the water-soluble polymer compound has two or more amino groups in the molecule, has a weight-average molecular weight of not less than 500 and not more than 50,000, and is a non-volatile polyamine.

## Description

### Technical Field

The present invention relates to a carbon dioxide fixation device and a battery including the carbon dioxide fixation device.

### Background Art

Technologies that aim to mitigate an increase in atmospheric carbon dioxide concentration and to reduce the concentration are collectively referred to as negative emission systems. As currently devised negative emission systems, for instance, BECCS (technology for capturing and storing, in the underground, carbon dioxide emitted when biomass fuels are used) and DACCS (technology for directly capturing and storing carbon dioxide already existing in the air) have been known. Both methods require energy input at the stage of transition from atmospheric carbon dioxide capture to storage.

For example, Patent Literature 1 discloses, as a means for fixing atmospheric carbon dioxide as an alkali earth metal carbonate, a method including: providing an aqueous solution having a metal ion and a polyamine dissolved in advance; exposing the aqueous solution to the air; and absorbing (dissolving) and then precipitating atmospheric carbon dioxide as a carbonate.

Patent Literature 2 discloses a method including: bringing carbon dioxide-containing gas into contact with an alkanolamine aqueous solution in an absorption tower to absorb the carbon dioxide gas; and then heating the carbon dioxide-containing solution to desorb and recover the carbon dioxide gas in a desorption tower.

### Citation List

### Patent Literature

Patent Literature 1: Japanese Patent Laid-Open No. 2010-194378
Patent Literature 2: Japanese Patent Laid-Open No. 2006-240966

### Summary of Invention

### Technical Problem

Unfortunately, as described in the above Patent Literatures 1 and 2, energy input is required at the time of carbon dioxide fixation, and some form of energy extraction has not been considered in the previous studies.

Thus, the purpose of the present invention is to provide a carbon dioxide fixation device capable of efficiently fixing atmospheric carbon dioxide while extracting energy.

### Solution to Problem

The present inventors have conducted intensive research to solve the above-mentioned problems, and have found that if a carbon dioxide fixation device includes an aqueous solution containing a water-soluble polymer compound and positive and negative electrode materials, and is capable of producing carbon dioxide-derived carbonate after discharge between the electrode materials, energy can be extracted during carbon dioxide fixation. The present invention is based on these findings and has been completed.

In the carbon dioxide fixation device, energy can be extracted while atmospheric carbon dioxide is precipitated as a carbonate and fixed.

It is preferable that the water-soluble polymer compound has two or more amino groups in the molecule, has a weight-average molecular weight of not less than 500 and not more than 50,000, and is a non-volatile polyamine. The above configuration of the water-soluble polymer compound allows for efficient carbon dioxide absorption and excellent safety.

It is preferable that the concentration of the water-soluble polymer compound in the aqueous solution is not less than 1 mass ppm and less than 1000 mass ppm. The above configuration of the water-soluble polymer compound allows for carbon dioxide absorption and excellent safety.

The aqueous solution immediately after preparation preferably has a pH of not less than 8.6 and not more than 14. The pH within the above range facilitates the absorption of carbon dioxide into the aqueous solution.

In the carbon dioxide fixation device in a state before immersing metals for electrodes, the aqueous solution is preferably substantially free of metal ions.

In the carbon dioxide fixation device, a liquid surface of the aqueous solution is preferably in contact with air. The aqueous solution is highly safe, and can thus be exposed directly to the air.

In the carbon dioxide fixation device in a state before discharge, atmospheric carbon dioxide is preferably optionally dissolved to a saturated concentration in the aqueous solution.

The negative electrode material preferably comprises a metal element other than alkali metals.

The negative electrode material preferably comprises one or more metal elements selected from the group consisting of zinc, iron, and magnesium.

The positive electrode material preferably comprises a material with a relatively higher standard Gibbs energy of formation than the negative electrode material.

In the carbon dioxide fixation device, electrical energy is preferably capable of being extracted therefrom.

In the carbon dioxide fixation device in a state after discharge, the aqueous solution preferably has a pH of not less than 5.8 and less than 8.6.

The present invention also provides a battery including the carbon dioxide fixation device.

### Advantageous Effects of Invention

The carbon dioxide fixation device of the present invention is capable of efficiently fixing atmospheric carbon dioxide while extracting energy.

### Brief Description of Drawings

FIG. 1 is a photograph obtained by photographing a carbon dioxide fixation device according to an embodiment of the present invention;
FIG. 2 is a graph showing a time course of voltage in the carbon dioxide fixation device of Example 1;
FIG. 3 is a graph showing a time course of current in the carbon dioxide fixation device of Example 1;
FIG. 4 is a graph showing a time course of voltage in the carbon dioxide fixation device of Example 2;
FIG. 5 is a graph showing a time course of current in the carbon dioxide fixation device of Example 2;
FIG. 6 is a graph showing a time course of voltage in the carbon dioxide fixation device of Comparative Example 1; and
FIG. 7 is a graph showing a time course of current in the carbon dioxide fixation device of Comparative Example 1.

### Description of Embodiments

### [Carbon dioxide fixation device]

A carbon dioxide fixation device of the present invention includes at least an aqueous solution containing a water-soluble polymer compound and positive and negative electrode materials. Inclusion of the water-soluble polymer compound in the above aqueous solution makes it possible to efficiently absorb atmospheric carbon dioxide and generate a carbonate ion. In the above carbon dioxide fixation device, when discharging between the above electrode materials, energy can be extracted while atmospheric carbon dioxide is fixed. Specifically, the above carbon dioxide fixation device is configured such that the above positive and negative electrode materials are connected to an external circuit to form a circuit via the aqueous solution. This can flow a current, which can be extracted, as energy, through, for instance, an LED included in the external circuit. Further, when discharging in the above external circuit, the atmospheric carbon dioxide absorbed in the aqueous solution can react to produce the atmospheric carbon dioxide-derived carbonate for fixation. Note that as used herein, the term "air" includes gases such as air present in an open system and/or exhaust gas if it contains carbon dioxide.

Thus, the above carbon dioxide fixation device is capable of fixing atmospheric carbon dioxide while extracting energy. In other words, the above carbon dioxide fixation device can be used as a negative emission system that fixes and recovers atmospheric carbon dioxide while at the same time extracting energy.

Note that unless otherwise specifically indicated herein, it is assumed to mean a state before discharge.

In addition, the carbon dioxide fixation device preferably includes a separator to separate the above positive electrode material from the negative electrode material. Including the separator facilitates use as a battery. As the separator above, any known separator used for batteries can be used without particular limitation, but it is preferable to use a resin separator.

### (Aqueous solution containing water-soluble polymer compound)

The above carbon dioxide fixation device includes an aqueous solution containing a water-soluble polymer compound (hereinafter, sometimes referred to as "aqueous solution" or "electrolytic liquid"). Inclusion of the water-soluble polymer compound in the above aqueous solution makes it possible to efficiently absorb atmospheric carbon dioxide as a carbonate ion. Only one kind of the above water-soluble polymer compound in the above aqueous solution may be used, or two or more kinds thereof may be used.

The above water-soluble polymer compound is preferably a nitrogen atom-containing water-soluble polymer compound, and more preferably a polyamine and/or a salt thereof.

The weight-average molecular weight of the above water-soluble polymer compound is preferably not less than 500 and not more than 150,000, more preferably not less than 1000 and not more than 100,000, and still more preferably not less than 1500 and not more than 50,000. In addition, the upper limit is particularly preferably 40,000 or less, and may be 30,000 or less, 20,000 or less, or 15,000 or less. The weight-average molecular weight of 500 or more makes the compound less volatile. The weight-average molecular weight of 150,000 or less can suppress the attenuation of atmospheric carbon dioxide absorption capacity due to the desorption of the above water-soluble polymer compound as a precipitate from the aqueous solution by the increase in hydrophobicity of the entire molecule as caused by the formation of carboxylates or esters of the above water-soluble polymer compound with the dissolved carbon dioxide. Note that the above weight-average molecular weight can be measured, for example, under the following conditions.
Instrument: Gel Permeation Chromatograph GPC (Instrument name "No. GPC-31")
Detector: Differential refractive index detector RI (RI-501 manufactured by Showa Denko K.K., sensitivity 32)
Columns: One TSKgel G6000PWXL-CP, one G3000PWXL-CP (7.8 mm × 30 cm, manufactured by Tosoh Corporation)
Solvent: 0.1 M acetate buffer (pH 4)
Flow rate: 0.7 mL/min
Column temperature: 40°C
Injection volume: 0.2 mL
Standard sample: Monodisperse polyethylene oxide (PEO), polyethylene glycol (PEG) from Tosoh Corporation and Agilent Technologies Inc.
Data processing: GPC data processing system, manufactured by TRC

The above water-soluble polymer compound preferably has, in the molecule, two or more amino groups, more preferably three or more amino groups, and still more preferably four or more amino groups. The above water-soluble polymer compound may have two or more amino groups in the molecule. This can facilitate the formation of a carbamate compound with atmospheric carbon dioxide and enables efficient absorption of atmospheric carbon dioxide into the aqueous solution. In addition, spontaneous hydrolysis of the generated carbamate can be induced to promote production of carbonate ions in the aqueous solution.

Additionally, the above water-soluble polymer compound is preferably non-volatile. Since the above water-soluble polymer compound is non-volatile, the above aqueous solution is excellent in safety even in contact with the air. Note that as used herein, the term "non-volatile" means that the compound is non-volatile at room temperature (25°C) and normal pressure (1 atm).

The content of the above water-soluble polymer compound in the above aqueous solution as based on 100 mass% of the above aqueous solution is preferably not less than 1 mass ppm and less than 1000 mass ppm, more preferably not less than 3 mass ppm and not more than 900 mass ppm, still more preferably not less than 5 mass ppm and not more than 800 mass ppm, particularly preferably not less than 10 mass ppm and not more than 700 mass ppm, and most preferably not less than 15 mass ppm and not more than 600 mass ppm. When the above content is 1 mass ppm or more, carbon dioxide can be easily absorbed. The content of less than 1000 mass ppm is safe enough and facilitates wastewater treatment.

### <Polyamine>

The amino group of the above polyamine may comprise any of a primary amine, secondary amine, or tertiary amine.

Examples of the polyamine include a polyamine represented by the following formula (1): 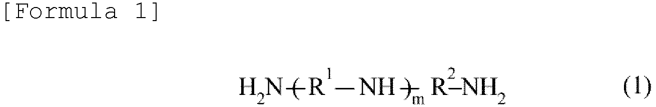 wherein m indicates an integer from 0 to 1000, and R¹ and R² each independently represent a C₂₋₈ linear or branched alkylene group, provided that when m is 2 or more, a plurality of R¹ may be the same or different.

The above R¹ and R² each preferably represent a C₂₋₆ linear or branched alkylene group, and more preferably a C₃₋₅ linear or branched alkylene group.

The above m indicates more preferably an integer from 1 to 500, still more preferably an integer from 2 to 100, particularly preferably an integer from 3 to 50, and especially preferably an integer from 5 to 10.

Among the polyamines represented by the above formula (1), examples of the polyamine where m = 0 include ethylenediamine, 1,2-diaminopropane, 1,3-diaminopropane, 1,4-diaminobutane (putrescine), 1,5-diaminopentane, 1,6-diaminohexane, 1,7-diaminoheptane, or 1,8-diaminooctane.

Among the polyamines represented by the above formula (1), examples of the polyamine where m is 1 or more include: spermidine, spermine; polyethyleneamine (e.g., diethylenetriamine, triethylenetetraamine, tetraethylenepentamine, pentaethylenehexamine, hexaethyleneheptamine, heptaethyleneoctamine, octaethylene nonamine, nonaethylene decamine); or polypropylene polyamine (e.g., dipropylene triamine, tripropylene tetramine, tetrapropylene pentamine, pentapropylene hexamine, hexapropylene heptamine, heptapropylene octamine, octapropylene nonamine, nonapropyl decamine).

Commercially available polyamines may each be used as a polyamine represented by the above formula (1). Examples of the commercially available product are shown in Table 1.

### [Table 1]

Examples of the above polyamine include a polymer having a structural unit derived from a cyclic amine represented by the following formula (2) (hereinafter, sometimes referred to as "polymer A"). This polymer A is obtained by ring-opening polymerization of a cyclic amine represented by the following formula (2): 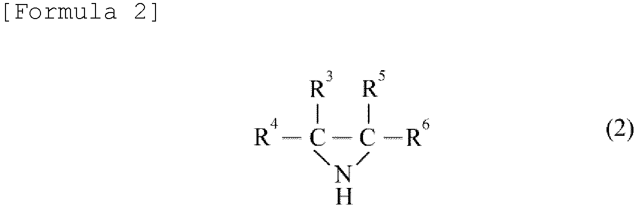 wherein R³, R⁴, R⁵, and R⁶ each independently represent a hydrogen atom or a methyl group.

Examples of the cyclic amine represented by the above formula (2) include aziridine (ethyleneimine), 2-methylaziridine, 2,2-dimethylaziridine, or 2,3-dimethylaziridine. Examples of a homopolymer among the polymers A include, polyethyleneimine, poly(2-methylaziridine), poly(2,2-dimethylaziridine), or poly(2,3-dimethylaziridine).

Commercially available products may each be used as the above polymer A. Examples of the commercially available product are shown in Table 2.

**[Table 2]**

| (Table 2) | | | |
|---|---|---|---|
| Component name | Product name | Molecular weight | Manufacturer |
| Polyethyleneimine | Poly ethy leneimine (approx imately 30% aqueous solution) | /0,000 (Weight-average molecular weight) | Tokyo Chemical Industry Co., Ltd. |

In addition, examples of the above polyamine include a polymer having a structural unit derived from an unsaturated amine represented by the following formula (3) (hereinafter, sometimes referred to as "polymer B"). This polymer B is obtained by polymerization of an unsaturated group of an unsaturated amine represented by the following formula (3): 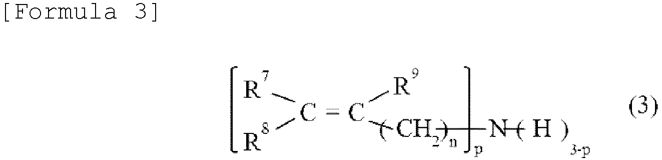 wherein n indicates an integer of 0 to 2, p indicates an integer of 1 to 3, and R⁷, R⁸, and R⁹ each independently represent a hydrogen atom or a methyl group.

Examples of the unsaturated amine represented by the above formula (3) include vinylamine, divinylamine, trivinylamine, allylamine, diallylamine, triallylamine, metallylamine, dimethallylamine, trimethallylamine, crotylamine, dicrotylamine, tricrotylamine, 3-methyl-2-butenylamine, or 3-butenylamine.

Examples of a homopolymer among the above polymers B include polyvinylamine, polydivinylamine, polyallylamine, polydiallylamine, polytriallylamine, polymethacrylamine, polycrotylamine, or poly(3-butenylamine).

In addition to the above homopolymers, the above polymer A or B may be a copolymer. In terms of the arrangement form, the copolymer above may be any of a statistical, random, alternating, or periodic copolymer, and may be either a block copolymer or graft copolymer in terms of the polymer chain linkage.

In the case of a copolymer, the above polymer A may be a copolymer of two or more cyclic amines represented by the above formula (2). In the case of a copolymer, the above polymer B may be a copolymer of two or more unsaturated amines represented by the above formula (3) or a copolymer of one or two or more unsaturated amines represented by the above formula (3) and another monomer copolymerizable with the unsaturated amine represented by the formula (3).

Examples of the other monomer copolymerizable with the unsaturated amine represented by the above formula (3) include sulfur dioxide, (meth)acrylamide, (meth)acrylic ester, (meth)acrylic acid, or maleic acid.

When the above polymer B is a copolymer, the percentage of the structural unit derived from the unsaturated amine represented by the above formula (3) (including those in which a substituent is introduced into the amino group or those in which a salt is formed) as based on the entire copolymer is, for example, 20 mass% or higher, preferably 40 mass% or higher, more preferably 60 mass% or higher, still more preferably 80 mass% or higher, and particularly preferably 90 mass% or higher.

In addition, when the above polymer B is a copolymer, the percentage of the structural unit derived from the unsaturated amine represented by the above formula (3), in which structural unit no substituent is introduced into the amino group, (including those in which an amino group forms a salt) as based on the entire copolymer is, for example, 20 mass% or higher, preferably 40 mass% or higher, more preferably 60 mass% or higher, still more preferably 80 mass% or higher, and particularly preferably 90 mass% or higher.

Typical examples of a polymer having a structural unit derived from an unsaturated amine represented by the above formula (3), namely polymer B, include a homopolymer (e.g., polyvinylamine, poly(divinylamine), polyallylamine, polydiallylamine, polytriallylamine, polymethallylamine, poly(crotylamine), poly(3-butenylamine), a diallylamine polymer, poly(N,N-dimethylallylamine), poly(N-acetylallylamine)); or a copolymer (e.g., an allylamine-diallylamine copolymer, an allylamine-dimethylallylamine copolymer, a partially methoxycarbonylated allylamine copolymer, a partial ureaization allylamine polymer, a diallylamine-sulfur dioxide copolymer, a methyl diallylamine-sulfur dioxide copolymer, a diallylamine-acrylamide copolymer, an allylamine-maleic acid copolymer, a diallylamine-maleic acid copolymer, a methyldiallylamine-maleic acid copolymer, a partially formylated allylamine copolymer, a partially acetylated allylamine copolymer, a partially propionylated allylamine copolymer, an allylamine-N,N-dimethylallylamine copolymer, a partially formylated diallylamine copolymer, a partially acetylated diallylamine copolymer, a partially propionylated diallylamine copolymer).

In addition, the amino group in the molecule of any of the polyamine represented by the above formula (1), the above polymer A, or the above polymer B may or may not have a substituent.

Examples of the above substituent include a C₁₋₄ alkyl group (e.g., a methyl or ethyl group); a C₁₋₄ acyl group (e.g., a formyl, acetyl, or propionyl group); a C₁₋₄ alkoxycarbonyl group (e.g., a methoxycarbonyl or ethoxycarbonyl group); or a carbamoyl group. These substituents may each be introduced at the monomer stage or after polymerization. Only one kind of the above substituent may be used, or two or more kinds thereof may be used.

The above polyamine is preferably at least one compound selected from the group consisting of polyamines represented by the above formula (1), the above polymers A, and the above polymers B. In particular, from the viewpoint of better cost performance and availability, the above polyamine is more preferably any of the above polymer A and/or the above polymer B, and most preferably the above polymer B.

Commercially available products may each be used as the above polymer B. Examples of the commercially available product are shown in Table 3.

**[Table 3]**

| (Table 3) | | | |
|---|---|---|---|
| Component name | Product name | Molecular weight | Manufacturer |
| Polyallylamine | PAA-01 (15% aqueous solution) | 1600 (Weight-average molecular weight) | NITTOBO MEDICAL CO., LTD. |
| Polyallylamine | PAA-15C (15% aqueous solution) | 15,000 (Weight-average molecular weight) | NITTOBO MEDICAL CO., LTD. |
| Diallylamine polymer | PAS-21 (15% aqueous solution) | 5,000 (Weight-average molecular weight) | NITTOBO MEDICAL CO., LTD. |

The above polyamine salt may be either an acid salt or a quaternary ammonium salt. Examples of the above acid include an inorganic acid (e.g., hydrochloric acid, sulfuric acid, nitric acid, phosphoric acid, boric acid); a monovalent aliphatic carboxylic acid (e.g., formic acid, acetic acid, propionic acid, butyric acid, isobutyric acid, pentanoic acid, hexanoic acid, octanoic acid, decanoic acid, dodecanoic acid); a divalent aliphatic carboxylic acid (e.g., oxalic acid, malonic acid, succinic acid, glutaric acid, adipic acid); a hydroxycarboxylic acid (e.g., glycolic acid, lactic acid, malic acid, tartaric acid); or an organic acid (e.g., sulfonic acid (e.g., methane sulfonic acid, p-toluenesulfonic acid)).

The above aqueous solution may contain various additives as other components as long as the effects of the present invention are not impaired. As the other components above, for example, one or two or more of organic solvents, thickening stabilizers, viscosity modifiers, preservatives, surfactants, and/or quality stabilizers may be blended.

Note that the aqueous solution above is preferably substantially free of lithium ions, and more preferably substantially free of metal ions. When the aqueous solution above is substantially free of metal ions, wastewater treatment after use is easy. Note that as used herein, the wording "substantially free of metal ions" means that no metal element-containing raw materials other than those for immersing an electrode material are actively immersed and that, for example, the metal ion concentration in the above aqueous solution is 1.0 mol/L or less.

From the viewpoint of maximizing the function of the above polyamine and/or a salt thereof, the content of components other than water, the polyamine, and the polyamine salt in the above aqueous solution as based on 100 mass% of the above aqueous solution is preferably less than 5 mass%, more preferably less than 3 mass%, still more preferably less than 1 mass%, and particularly preferably zero. When the content of the above other components is less than 5 mass%, the effect of the polyamine and/or a salt thereof is more effective because of no interference with the other components in the aqueous solution.

The aqueous solution above contains a polyamine and/or a salt thereof as a functional component, and the total content of water, the polyamine, and the polyamine salt as based on 100 mass% of the above aqueous solution is, for example, 95 mass% or higher, preferably 98 mass% or higher or 99 mass% or higher, more preferably 99.5 mass% or higher, still more preferably 99.95 mass% or higher, particularly preferably 99.98 mass% or higher, and most preferably 100 mass%.

The pH of the above aqueous solution immediately after preparation is preferably not less than 8.6 and not more than 14, more preferably not less than 9 and not more than 13, and still more preferably not less than 9.5 and not more than 12. A pH of 8.6 or more allows for sufficient absorption of carbon dioxide, and a pH of 14 or less makes it safe enough as an aqueous solution and facilitates wastewater treatment.

The above aqueous solution preferably is able to dissolve atmospheric carbon dioxide to a saturated concentration. With the above configuration, atmospheric carbon dioxide can be efficiently fixed.

The above aqueous solution is preferably allowed to stand for 100 hours or more at room temperature and normal pressure in order to dissolve atmospheric carbon dioxide to a saturated concentration.

The pH of the above aqueous solution after being allowed to stand in air (preferably after being allowed to stand in air for 100 hours or more) is preferably not less than 7.5 and not more than 10, more preferably not less than 7.7 and not more than 9.5, and still more preferably not less than 8.1 and not more than 9.0. Sufficient absorption of carbon dioxide can be checked by whether the pH of the above polymer compound-containing aqueous solution after being allowed to stand is within the above range.

### (Electrode material)

The above carbon dioxide fixation device includes positive and negative electrode materials. Each of the above positive and negative electrode materials may consist of only one type of raw material or may contain two or more types of raw materials.

Known or conventional negative electrode materials may each be used as the negative electrode material above. In particular, the above negative electrode material is preferably provided such that the standard Gibbs energy of formation of carbonate is lower than that of hydroxide. It is easier to produce a carbonate after discharge in the above carbon dioxide fixation device if the standard Gibbs energy of formation of carbonate in the above negative electrode material is lower than that of hydroxide.

In addition, the solubility product has a unique value for each salt. If the product of the molar concentrations of the ionic species constituting the salt exceeds the solubility product, the salt precipitates as a crystal. Thus, when metal ions and atmospheric carbon dioxide are continuously supplied to the aqueous solution above, a carbonate can continuously precipitate from it. When discharging in the above carbon dioxide fixation device, the oxidation reaction at the negative electrode causes metal ions to be continuously eluted into the aqueous solution, which metal ions react with carbon dioxide to form a carbonate. Therefore, it is easy to produce a carbonate.

Specifically, it is preferable that the above negative electrode material contains a metal element other than alkali metals, and it is more preferable that it contains one or more metal elements selected from the group consisting of zinc, iron, copper, and magnesium, and it is still more preferable that it contains one or more metal elements selected from the group consisting of zinc, iron, and magnesium. It is particularly preferable to contain zinc. When the above negative electrode material is free of alkali metals, it is easier to ensure safety. In addition, the inclusion of one or more metal elements selected from the group consisting of zinc, iron, and magnesium makes it easy to fix as a carbonate after discharge.

The content of metals other than alkali metals in the above negative electrode material as based on 100 mass% of the above negative electrode material is preferably 90 mass% or higher, more preferably 95 mass% or higher, and still more preferably 100 mass%. By satisfying the above range, carbon dioxide in the aqueous solution (electrolytic liquid) can be easily fixed as a carbonate when discharging.

The standard Gibbs energy of formation of hydroxide resulting from the above negative electrode material is preferably -200 kJ/mol or less, more preferably -300 kJ/mol or less, and still more preferably -400 kJ/mol or less. The lower limit is not particularly limited, but is preferably -1000 kJ/mol or higher.

The standard Gibbs energy of formation of carbonate produced from the above negative electrode material is preferably -500 kJ/mol or less, more preferably -600 kJ/mol or less, and still more preferably -700 kJ/mol or less. When the standard Gibbs energy of formation of the carbonate is -500 kJ/mol or less, the carbonate is easily produced. In addition, the lower limit is not particularly limited, but is preferably - 3000 kJ/mol or higher.

Further, the standard Gibbs energy of formation of the carbonate is preferably at least 100 kJ/mol, more preferably at least 150 kJ/mol, and still more preferably at least 200 kJ/mol less than the standard Gibbs energy of formation of the above hydroxide. By satisfying the above range, the carbonate can be stably produced when a current flows through the carbon dioxide fixation device.

The standard Gibbs energy of formation of substance produced from the above negative electrode material is preferably -300 kJ/mol or less, more preferably -400 kJ/mol or less, and still more preferably -500 kJ/mol or less. When the above range is satisfied, the use as a negative electrode is easy.

The shape of the above negative electrode material is not particularly limited and may be used, for instance, in a plate, bar, or particle form, depending on the shape of the carbon dioxide fixation device.

Known or conventional positive electrode materials may each be used as the positive electrode material above. The positive electrode material, in particular, preferably comprises a material with a relatively higher standard Gibbs energy of formation than the negative electrode material. Note that the positive electrode material as a whole may have a higher standard Gibbs energy of formation than the negative electrode material. In this case, it is possible to contain a material with a lower standard Gibbs energy of formation than the above negative electrode material. However, it is preferable to be free of the material. The above configuration makes it easy to extract energy when a current flows through the above carbon dioxide fixation device.

For example, manganese dioxide or carbon may be used as the positive electrode material above. Note that when carbon is used as the positive electrode material, an air electrode that uses oxygen in the air as a positive electrode is formed.

The standard Gibbs energy of formation of substance produced from the above positive electrode material is preferably -500 kJ/mol or higher, more preferably -400 kJ/mol or higher, and still more preferably -300 kJ/mol or higher. When the above range is satisfied, the use as a positive electrode is easy. Note that when carbon is used as a positive electrode material, the standard Gibbs energy of formation of the substance produced from oxygen in air preferably satisfy the above range.

In addition, the difference in change of the standard Gibbs energy of formation between the above negative electrode material and the above positive electrode material is preferably 200 kJ/mol or higher, more preferably 250 kJ/mol or higher, and still more preferably 300 kJ/mol or higher. When the difference in change of the standard Gibbs energy of formation is 200 kJ/mol or higher, it is easy to provide sufficient electromotive force as a battery. In addition, the upper limit is not particularly limited, but is preferably 2000 kJ/mol or less.

The shape of the above positive electrode material is not particularly limited and may be used, for instance, in a plate, bar, or particle form.

The combination of the above negative electrode material and the above positive electrode material is not particularly limited. It is preferable to use zinc or magnesium as the negative electrode material and manganese dioxide as the positive electrode material, or to use zinc or magnesium as the negative electrode material and carbon as the positive electrode material.

In the above carbon dioxide fixation device, a liquid surface of the above aqueous solution should be in contact with air. The above aqueous solution is highly safe and can be used even in contact with air. If the above water-soluble polymer compound is non-volatile, it does not volatilize even if the aqueous solution comes into contact with air and can efficiently absorb atmospheric carbon dioxide.

The above carbon dioxide fixation device should be allowed to stand before discharge so as to stabilize the initial voltage. Next, the carbon dioxide fixation device is connected to an external circuit and a current flows therethrough. As a result, carbon dioxide in the aqueous solution reacts, and is fixed as a carbonate and precipitated while extracting energy.

The carbonate above depends on the material of the negative electrode material used, but is preferably a basic carbonate. Specific examples include zinc carbonate, iron carbonate, magnesium carbonate, magnesium carbonate trihydrate, magnesium carbonate pentahydrate, copper carbonate, or a basic carbonate thereof. Particularly preferred is zinc carbonate or a basic zinc carbonate.

The pH of the above aqueous solution after discharge is preferably not less than 5.8 and less than 8.6, more preferably not less than 6.0 and not more than 8.4, and still more preferably not less than 6.2 and not more than 8.2. If the pH of the aqueous solution after discharge meets the above range, drainage into, for instance, rivers or public sewers is easy and the safety may be high.

The above-described configuration of the above carbon dioxide fixation device allows for atmospheric carbon dioxide fixation and energy extraction. Electrical energy is preferred as the above energy. In addition, the charge is preferably 108 C or higher, more preferably 150 C or higher, and still more preferably 200 C or higher. Because 108 C or more of the above electrical energy can be extracted, it is suitable for use as a battery.

In addition, the carbon dioxide fixation device after discharge continuously absorbs atmospheric carbon dioxide into the above aqueous solution. In this way, the energy can be extracted by continuously fixing and precipitating carbon dioxide.

Further, since the above carbonate is precipitated in the above aqueous solution, they can be easily recovered from the above carbon dioxide fixation device. The aqueous solution after carbonate recovery above contains only low concentrations of polyamine and electrode-derived components, and is therefore highly safe. Besides, wastewater treatment is also easy.

### [Battery]

One embodiment of the present invention provides a battery including the above carbon dioxide fixation device. The above battery can be used as a battery that can fix and recover atmospheric carbon dioxide while using the above aqueous solution as an electrolytic liquid. Further, the above battery can be recycled by reabsorbing atmospheric carbon dioxide into the above electrolytic liquid. Therefore, the battery can function as a negative emission system for fixing atmospheric carbon dioxide. Furthermore, even without external energy input, it is possible to extract electrical energy as a battery.

### Examples

Hereinafter, the present invention will be described more specifically with reference to Examples. The present invention, however, is not limited to these Examples.

### Example 1

First, 75-ml aqueous solution of a water-soluble polymer compound containing polyallylamine with a concentration of 100 mass ppm and a molecular weight of 1600 was prepared in a glass beaker, and its pH was measured to be 10.18. The above aqueous solution was allowed to stand in contact with the air under conditions at 18-22°C for 150 hours. The pH was measured again and found to be 8.22, suggesting that atmospheric carbon dioxide was absorbed into the above water-soluble polymer aqueous solution.

### Reference Example 1

Instead of the water-soluble polymer aqueous solution in Example 1, 10× concentrated (concentration: 1000 mass ppm) polyallylamine water-soluble polymer aqueous solution was prepared, and its pH was measured to be 11.19. When the same test was conducted on the concentrated solution of Reference Example 1, the pH was found to decrease to 8.60.

Both Example 1 and Reference Example 1 showed a decrease in pH after standing, demonstrating that atmospheric carbon dioxide was absorbed. When Example 1 and Reference Example 1 were compared, the error between the pH of Example 1 and that assumed from the concentration of atmospheric carbon dioxide was smaller. Thus, the aqueous solution of Example 1 was used for testing below.

### (To produce carbon dioxide fixation device)

As a positive electrode material, a carbon rod, a terminal, and an electrode plate holder from the carbon rod set for electrolysis (trade name: "B10-2064", manufactured by NARIKA CORPORATION) were used, and set in a separating cup (trade name: "Daniel Battery DT-B", manufactured by NARIKA CORPORATION). Next, a mixture of granular manganese oxide (IV) (manufactured by Hayashi Pure Chemical Ind., Ltd.) crushed to 3 mm and powdered graphite (trade name "FK-300", manufactured by Monami Co., Ltd.) was spread in a separating cup to produce a positive electrode.

The above positive electrode was set in a 100-ml beaker (trade name "PB-100", Niigata Seiki Co., Ltd.), and a zinc plate was set as the negative electrode on the negative electrode side, which was separated from the positive electrode side by using the above separating cup. Then, about 50 ml of the aqueous solution of Example 1 above was added to prepare a carbon dioxide fixation device of Example 1.

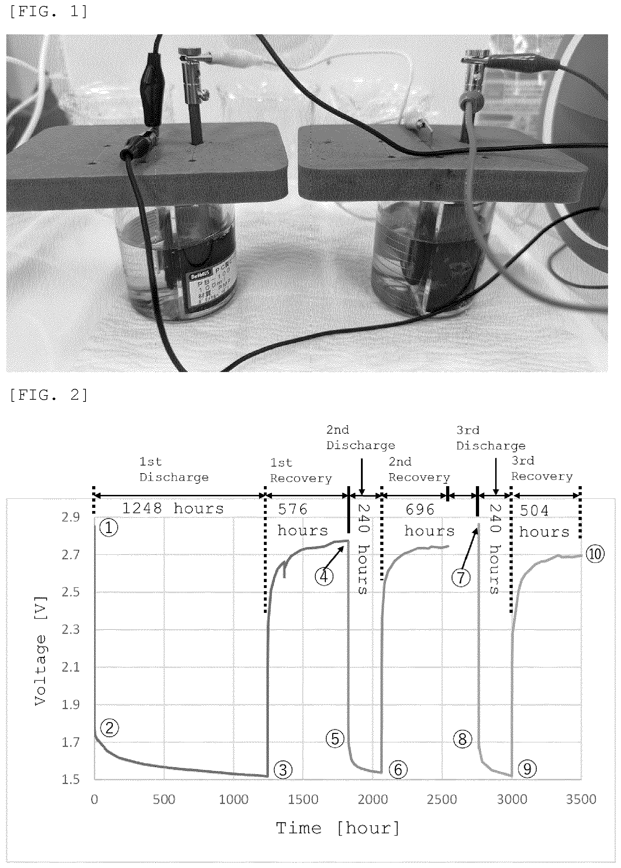

As shown in FIG. 1, two sets of the carbon dioxide fixation device of Example 1 were produced. The devices were connected in series while the liquid surface of the above aqueous solution was in contact with the air. The voltage was then measured and the output was 1.25 V × 2, i.e., 2.5 V. After 21 hours, the voltage rose to 2.8 V, and remained at 2.8 V after 24 hours. At this point, it was judged to have reached the initial voltage before discharge, and the discharge test described below was then conducted. Note that, about 10 ml of the above aqueous solution was added since the electrolytic liquid penetrated to the positive electrode side, and the liquid level was set at 100 ml on the scale of the beaker.

With respect to the procedure for evaluating the carbon dioxide fixation device described above, a red light-emitting diode (hereinafter, referred to as "LED"), which enabled visualization of electric energy flow, was used as a load. The circuit was a series circuit including an LED and a 326.9 Q (measured value) LED current-limiting resistor (hereinafter referred to as "R") .

The two data acquired were the voltage between the terminals of the carbon dioxide fixation device and the voltage between both ends of R. For the current, the current value was set to the value obtained by dividing the voltage between both ends of R by the resistance of 326.9 Q (measured value).

### (Discharge test)

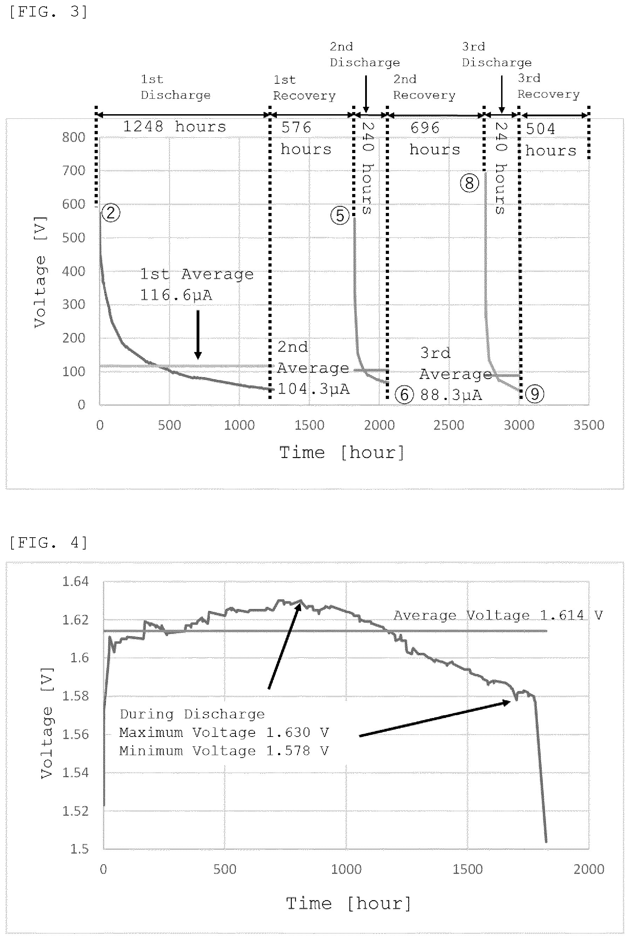

The pH, voltage, and current of the above aqueous solution were measured and the average current and charge were calculated while the solution was subjected to multiple discharge tests under the following conditions. FIGS. 2 and 3 and Tables 1 and 2 show the results.
1. Keep a state where discharge until LED light emission is undetected during 1st discharge
2. After completion of the discharge, the device is allowed to stand, and when the voltage exceeds 2.77 V, which is 99% of the voltage before discharge (2.8 V), the recovery is completed. Start 2nd discharge.
3. Keep a state where discharge until LED light emission is undetected during 2nd discharge
4. After the 2nd discharge, the device is allowed to stand, and the voltage recovery characteristics are checked, and when the voltage exceeds 2.74 V, which is 99% of 2.77 V, the recovery is completed. Replace the zinc plate with a new one, and repeat the discharge and recovery process.

### [Table 4]

**Table 4**

| | | Time [h] | Current [µA] | Voltage [V] |
|---|---|---|---|---|
| ① | Before 1st discharge | 0 | - | 2.80 |
| ② | Start 1st discharge | 0 | 574.4 | 1.85 |
| ③ | Stop 1st discharge | 1248 | 46.50 | 1.52 |
| ④ | Complete 1st recovery | 1824 | - | 2.77 |
| ⑤ | Start 2nd discharge | 1824 | 557.4 | 1.80 |
| ⑥ | Stop 2nd discharge | 2064 | 67.91 | 1.54 |
| ⑦ | Complete 2nd recovery | 2760 | - | 2.86 |
| ⑧ | Start 3rd discharge | 2760 | 691.6 | 1.91 |
| ⑨ | Stop 3rd discharge | 3000 | 43.44 | 1.52 |
| ⑩ | Complete 3rd recovery | 3504 | - | 2.70 |

### [Table 5]

**Table 5**

| | Electric charge [C] | Average current [µA] |
|---|---|---|
| 1st Discharge test | 522.8 | 116.6 |
| 2nd Discharge test | 90.2 | 104.3 |
| 3rd Discharge test | 76.3 | 88.3 |

With respect to the carbon dioxide fixation device of Example 1, in the above carbon dioxide fixation device, 30 mAh (= 108 C) was used as a reference, and the discharge continued over the reference. This has suggested that the energy can be extracted and the device can be used as a battery. A recovery period was set such that carbon dioxide was again reabsorbed into the above aqueous solution. This has suggested that the battery can be regenerated and recycled.

The zinc plate of the negative electrode after the above discharge test was subjected to powder X-ray diffraction. The results showed that a basic zinc carbonate Zn₅(OH)₆(CO₃)₂ was identified, while zinc oxide was not. In other words, it was confirmed that atmospheric carbon dioxide was absorbed into the above aqueous solution and fixed as a carbonate while acting as a component of the electrolytic liquid of the battery.

### Example 2

The carbon dioxide fixation device of Example 2 was produced in the same manner as in Example 1, except that activated carbon (trade name: "Granular Activated Carbon for Gas Phase 4GG", manufactured by AS ONE Corporation) was used instead of granular manganese oxide (IV) (manufactured by Hayashi Pure Chemical Ind., Ltd.) crushed to 3 mm and powdered graphite (trade name: "FK-300", manufactured by Monami Co., Ltd.) as the positive electrode material.

Two sets of the carbon dioxide fixation device of Example 2 were produced. The devices were connected in series while the liquid surface of the above aqueous solution was in contact with the air. The voltage was then measured and the output was 1.652 V. The electrolytic liquid gradually permeated to the positive electrode (activated carbon) side while passing through the separator. Thus, the voltage characteristics were measured while replenishing the beaker with electrolytic liquid as necessary to keep the scale at a position of 100 ml. In the activated carbon positive electrode of Example 2, it took time for the voltage to rise. White corrosion products, probably due to self-discharge, were deposited on the zinc plate of the negative electrode. Finally, at the end of 168 hours (7 days), the voltage reached about 1.99 V, and although there was a tendency for further increase, it was determined that this was the initial voltage before discharge, and was used for the discharge test described below.

### (Discharge test)

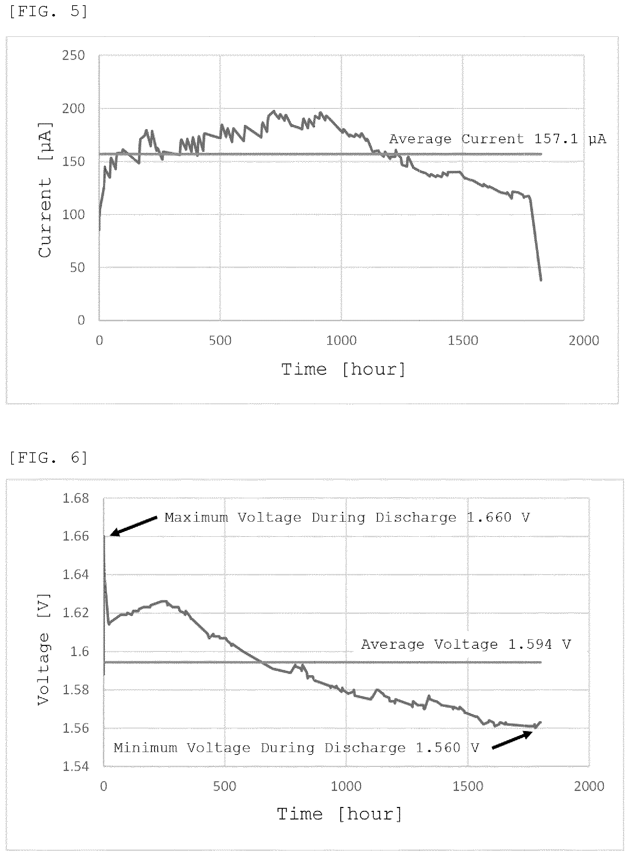

A discharge test was conducted while keeping a state where a current flows until LED light emission was undetected. The pH, voltage, and current of the aqueous solution of Example 2 were measured. FIGS. 4 and 5 show the results.

As shown in FIG. 4, in the carbon dioxide fixation device of Example 2, the discharge continued for 1824 hours (76 days), and the average voltage during discharge was 1.614 V (maximum value: 1.630 V, minimum value: 1.578 V). As shown in FIG. 5, the average current was 157.1 µA, the pH of the electrolytic liquid at the end of discharge was 7.27, and the electric charge was 1031.5 C.

The zinc plate of the carbon dioxide fixation device of Example 2 after the above discharge test was subjected to powder X-ray diffraction, and a basic zinc carbonate Zn₅(OH)₆(CO₃)₂ was detected. Therefore, in the carbon dioxide fixation device of Example 2, the energy was able to be extracted as a battery. In addition, it was confirmed that atmospheric carbon dioxide was absorbed into the above aqueous solution and fixed while acting as a component of the electrolytic liquid of the battery.

### Comparative Example 1

First, 75 ml of 0.001 mmol/L potassium hydroxide aqueous solution was prepared in a glass beaker, and its pH was measured to be 10.55. The above aqueous solution was allowed to stand in contact with the air under conditions at 18-22°C for 120 hours. The pH was measured again and found to be 7.73, suggesting that atmospheric carbon dioxide was absorbed into the above potassium hydroxide aqueous solution.

The carbon dioxide fixation device of Comparative Example 1 was produced in the same manner as in Example 2, except that the above potassium hydroxide aqueous solution was used instead of the aqueous solution of Example 2.

Two sets of the carbon dioxide fixation device of Comparative Example 1 were produced. The devices were connected in series while the liquid surface of the above aqueous solution was in contact with the air. The voltage was then measured and the output was 1.690 V. The electrolytic liquid gradually permeated to the positive electrode (activated carbon) side while passing through the separator. Thus, the voltage characteristics were measured while replenishing the beaker with electrolytic liquid as necessary to keep the scale at a position of 100 ml. Finally, at the end of 168 hours (7 days), the voltage reached 1.986 V, and it was determined that this was the initial voltage before discharge, and was used for the discharge test described below.

### (Discharge test)

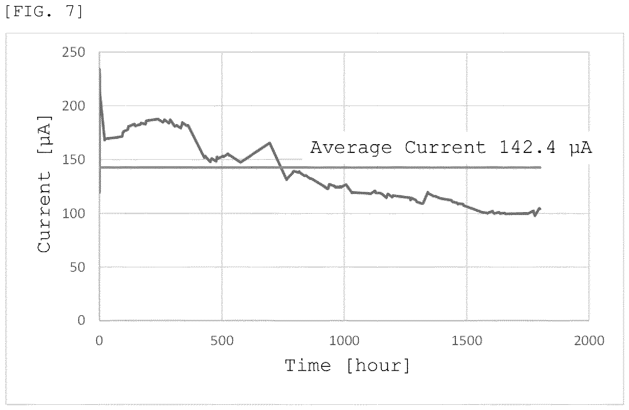

A discharge test was conducted while keeping a state until LED light emission was undetected. The pH, voltage, and current of the aqueous solution of Comparative Example 1 were measured. FIGS. 6 and 7 show the results.

As shown in FIG. 6, in the carbon dioxide fixation device of Comparative Example 1, the discharge continued for 1800 hours (75 days), and the average voltage during discharge was 1.594 V (maximum value: 1.660 V, minimum value: 1.560 V). In addition, as shown in FIG. 7, the average current was 142.4 µA, the pH of the electrolytic liquid at the end of discharge was 7.08, and the electric charge was 900 C.

The zinc plate of the carbon dioxide fixation device of Comparative Example 1 after the above discharge test was subjected to powder X-ray diffraction, and a basic zinc carbonate Zn₅(OH)₆(CO₃)₂ was detected. Therefore, in the carbon dioxide fixation device of Comparative Example 1, the energy was able to be extracted as a battery. In addition, it was confirmed that atmospheric carbon dioxide was absorbed into the above aqueous solution and fixed while acting as a component of the electrolytic liquid of the battery.

The carbon dioxide fixation device in Example 2 was compared with that in Comparative Example 1. The results have revealed that the carbon dioxide fixation device in the Example has a superior average voltage, average current, and electric charge, can fix atmospheric carbon dioxide more efficiently, and can be used better as a battery. In addition, the carbon dioxide fixation device of Example 2 was safer than that of Comparative Example 1, for which aqueous potassium hydroxide was used.

Variations of the present invention are described below.
[Item 1]
   A carbon dioxide fixation device comprising an aqueous solution containing a water-soluble polymer compound and positive and negative electrode materials,
   wherein the device is capable of producing carbon dioxide-derived carbonate after discharge between the electrode materials.
[Item 2]
   The carbon dioxide fixation device according to item 1, wherein the water-soluble polymer compound has a weight-average molecular weight of not less than 500 and not more than 50,000, and is a non-volatile polyamine.
[Item 3]
   The carbon dioxide fixation device according to item 1 or 2, wherein the water-soluble polymer compound has two or more amino groups in the molecule.
[Item 4]
   The carbon dioxide fixation device according to any one of items 1 to 3, wherein the water-soluble polymer compound is a non-volatile polyamine.
[Item 5]
   The carbon dioxide fixation device according to any one of items 1 to 4, wherein the water-soluble polymer compound has two or more amino groups in the molecule, has a weight-average molecular weight of not less than 500 and not more than 50,000, and is a non-volatile polyamine.
[Item 6]
   The carbon dioxide fixation device according to any one of items 1 to 5, wherein a concentration of the water-soluble polymer compound in the aqueous solution is not less than 1 mass ppm and less than 1000 mass ppm.
[Item 7]
   The carbon dioxide fixation device according to item 4 or 5, wherein polyallylamine is included as the polyamine.
[Item 8]
   The carbon dioxide fixation device according to any one of items 1 to 7, wherein the aqueous solution immediately after preparation has a pH of not less than 8.6 and not more than 14.
[Item 9]
   The carbon dioxide fixation device according to any one of items 1 to 8, wherein the aqueous solution after being allowed to stand in air has a pH of not less than 7.5 and not more than 10.
[Item 10]
   The carbon dioxide fixation device according to any one of items 1 to 9, wherein, in a state before immersing metals for electrodes, the aqueous solution is substantially free of metal ions.
[Item 11]
   The carbon dioxide fixation device according to any one of items 1 to 10, wherein a liquid surface of the aqueous solution is in contact with air.
[Item 12]
   The carbon dioxide fixation device according to any one of items 1 to 11, wherein, in a state before discharge, atmospheric carbon dioxide is optionally dissolved to a saturated concentration in the aqueous solution.
[Item 13]
   The carbon dioxide fixation device according to any one of items 1 to 12, wherein the negative electrode material comprises a metal element other than alkali metals.
[Item 14]
   The carbon dioxide fixation device according to any one of items 1 to 13, wherein the negative electrode material comprises one or more metal elements selected from the group consisting of zinc, iron, and magnesium.
[Item 15]
   The carbon dioxide fixation device according to any one of items 1 to 14, wherein the positive electrode material comprises a material with a relatively higher standard Gibbs energy of formation than the negative electrode material.
[Item 16]
   The carbon dioxide fixation device according to any one of items 1 to 15, wherein the positive electrode material comprises manganese dioxide and/or carbon.
[Item 17]
   The carbon dioxide fixation device according to any one of items 1 to 16, wherein a difference in change of standard Gibbs energy of formation between the negative electrode material and the positive electrode material is 200 kJ/mol or more.
[Item 18]
   The carbon dioxide fixation device according to any one of items 1 to 17, wherein electrical energy is capable of being extracted therefrom.
[Item 19]
   The carbon dioxide fixation device according to any one of items 1 to 18, wherein energy is capable of being extracted therefrom while carbon dioxide is continuously fixed and precipitated.
[Item 20]
   The carbon dioxide fixation device according to any one of items 1 to 19, wherein, in a state after discharge, the aqueous solution has a pH of not less than 5.8 and less than 8.6.
[Item 21]
   A battery comprising the carbon dioxide fixation device according to any one of items 1 to 20.

## Claims

1. A carbon dioxide fixation device comprising an aqueous solution containing a water-soluble polymer compound and positive and negative electrode materials,
wherein the device is capable of producing carbon dioxide-derived carbonate after discharge between the electrode materials.

2. The carbon dioxide fixation device according to claim 1, wherein the water-soluble polymer compound has two or more amino groups in the molecule, has a weight-average molecular weight of not less than 500 and not more than 50,000, and is a non-volatile polyamine.

3. The carbon dioxide fixation device according to claim 1 or 2, wherein a concentration of the water-soluble polymer compound in the aqueous solution is not less than 1 mass ppm and less than 1000 mass ppm.

4. The carbon dioxide fixation device according to claim 2, wherein polyallylamine is included as the polyamine.

5. The carbon dioxide fixation device according to claim 1 or 2, wherein the aqueous solution immediately after preparation has a pH of not less than 8.6 and not more than 14.

6. The carbon dioxide fixation device according to claim 1 or 2, wherein, in a state before
immersing metals for electrodes, the aqueous solution is substantially free of metal ions.

7. The carbon dioxide fixation device according to claim 1 or 2, wherein a liquid surface of the aqueous solution is in contact with air.

8. The carbon dioxide fixation device according to claim 1 or 2, wherein, in a state before discharge, atmospheric carbon dioxide is optionally dissolved to a saturated concentration in the aqueous solution.

9. The carbon dioxide fixation device according to claim 1 or 2, wherein the aqueous solution after being allowed to stand in air has a pH of not less than 7.5 and not more than 10.

10. The carbon dioxide fixation device according to claim 1 or 2, wherein the negative electrode material comprises a metal element other than alkali metals.

11. The carbon dioxide fixation device according to claim 1 or 2, wherein the negative electrode material comprises one or more metal elements selected from the group consisting of zinc, iron, and magnesium.

12. The carbon dioxide fixation device according to claim 1 or 2, wherein the positive electrode material comprises a material with a relatively higher standard Gibbs energy of formation than the negative electrode material.

13. The carbon dioxide fixation device according to claim 1 or 2, wherein electrical energy is capable of being extracted therefrom.

14. The carbon dioxide fixation device according to claim 1 or 2, wherein, in a state after discharge, the aqueous solution has a pH of not less than 5.8 and less than 8.6.

15. A battery comprising the carbon dioxide fixation device according to claim 1 or 2.
